# EUROPÄISCHE PATENTSCHRIFT

(11) **EP 2 211 156 B1**
(45) Veröffentlichungstag und Bekanntmachung des Hinweises auf die Patenterteilung: **15.02.2012**
(21) Anmeldenummer: 09178877.8
(22) Anmeldetag: 11.12.2009
(51) Int. Cl.: G01L 9/12, G01L 9/00

(54) **Verfahren zur Herstellung eines mikromechanischen kapazitiven Drucksensors**
Method for manufacturing a micro-mechanical capacitative pressure sensor
Procédé de fabrication d'un capteur de pression capacitif micromécanique

(30) Priorität: 26.01.2009 DE 102009000403
(43) Veröffentlichungstag der Anmeldung: 28.07.2010
(73) Patentinhaber: Robert Bosch GmbH, 70469 Stuttgart (DE)
(72) Erfinder: Reinmuth, Jochen, 72766, Reutlingen (DE)

(56) Entgegenhaltungen:
- JP-A- 9 043 083

## Beschreibung

Die Erfindung betrifft einen mikromechanischen kapazitiven Drucksensor und ein Verfahren zur Herstellung eines mikromechanischen kapazitiven Drucksensors.

### Stand der Technik

Bei mikromechanischen kapazitiven Drucksensoren werden in einem Halbleitersubstrat mittels eines mikromechanischen Herstellungsverfahrens Elektroden zur Bildung eines Kondensators erzeugt. Hierbei wird eine der Elektroden derart erzeugt, dass sie gegenüber der anderen Elektrode beweglich ausgestaltet ist. Bekannt ist hierzu, diese Elektrode in einer Membran zu integrieren. Wird nun die Membran durch eine Druckbeaufschlagung durchgebogen, verändert sich der Abstand der beiden, Kondensatorplatten bildenden Elektroden und somit die Kapazität des Kondensators. Diese Veränderung kann im Rahmen eines Verstärkerbetriebes, bei dem der Verstärkungsfaktor von der Kapazität des Kondensators abhängt, ausgenutzt werden, um die Auslenkung der Membran auf einfache Weise kapazitiv zu erfassen. Ein derartiger mikromechanischer Drucksensor ist beispielsweise aus EP 0 714 017 A1 bekannt.

Nachteilig bei derartigen mikromechanischen Drucksensoren ist, dass die Membran bei einer Druckbeaufschlagung flexibel durchgebogen wird, das heißt, bei einer Druckänderung wird die Membran in ihrer Mitte deutlich stärker als an ihren Rändern ausgelenkt. Hierdurch liegt eine auf die gesamte Kondensatorfläche bezogene nichtlineare Abstandsänderung vor, so dass ein Ausgangssignal eines derartigen Drucksensors in der Regel nicht linear ist.

Aus der älteren deutschen Patentanmeldung DE 10 2007 029 414.1 ist ein mikromechanischer kapazitiver Drucksensor bekannt, bei dem eine feststehende Elektrode und eine in einer Membran integrierte Elektrode seitlich aneinander vorbeibewegt werden.

Aus der älteren deutschen Patentanmeldung DE 10 2008 002 668 ist ein weiterer mikromechanischer kapazitiver Drucksensor bekannt, bei dem ebenfalls zur Erzielung eines linearen Ausgangssignals eine feststehende Elektrode und eine in einer Membran integrierte Elektrode seitlich aneinander vorbeibewegbar sind.

Aus der Schrift JP 9 043083 A ist ein kapazitiv messender Drucksensor bekannt, bei dem eine Elektrode auf dem Substrat fixiert wird, während eine zweite Elektrode beweglich an einer Membran befestigt ist. Die Befestigung der zweiten Elektrode ist dabei so gewählt, dass sich bei einer Durchbiegung der Membran die ebene Fläche der zweiten Elektrode gleichmäßig an die erste Elektrode annähert, so dass sich über einen großen Bereich eine lineare Abhängigkeit des Kapazitätswerts von der Durchbiegung der Membran ergibt.

### Vorteile der Erfindung

Der mikromechanische kapazitive Drucksensor mit den im Anspruch 1 genann-ten Merkmalen und das Verfahren zur Herstellung eines mikromechanischen ka-pazitiven Drucksensors mit den im Anspruch 8 genannten Merkmalen bieten den Vorteil, dass in einfacher Weise eine hohe Kapazitätsänderung bei kleinem Flä-chenbedarf mit hoher Empfindlichkeit detektiert werden kann. Insbesondere wer-den Nichtlinearitäten im Ausgangssignal vermieden.

Dadurch, dass die zweite Elektrode mit einer Membran mechanisch wirkverbun-den ist und durch die Membran im Wesentlichen parallel zu der ersten Elektrode verlagerbar ist, kann die druckbedingte Durchbiegung der Membran in eine im Wesentlichen parallele Bewegung der mit der Membran verbundenen Elektrode zu der festen Elektrode umgesetzt werden.

In bevorzugter Ausgestaltung der Erfindung ist vorgesehen, dass die zweite Elektrode an der Membran über wenigstens ein Kopplungselement angehängt ist, wobei das wenigstens eine Kopplungselement in einem Bereich der Membran mit dessen höchster Auslenkung angeordnet ist. Hierdurch wird eine sehr effek-tive, eine hohe Empfindlichkeit des Drucksensors hervorrufende Umsetzung der Durchbiegung der Membran in die Parallelbewegung der zweiten Elektrode zu der festen ersten Elektrode möglich.

In weiterer bevorzugter Ausgestaltung der Erfindung ist vorgesehen, dass die zweite Elektrode über ein Kopplungselement mit der Membran in dessen geo-metrischen Mittelpunkt verbunden ist. Hierdurch wird eine große Empfindlichkeit des Drucksensors erzielt, da die Durchbiegung der Membran in dessen geometri-schen Mittelpunkt bei der Druckbeaufschlagung zuerst auftritt und am größten ist.

Ferner ist in bevorzugter Ausgestaltung der Erfindung vorgesehen, dass die zweite Elektrode über mehrere, ringförmige um den geometrischen Mittelpunkt der Membran angeordnete Kopplungselemente mit der Membran verbunden ist. Hierdurch wird eine sehr robuste Verbindung zwischen der zweiten Elektrode und der Membran erzielt. Insbesondere auch bei plötzlich starken Druckschwankungen kann so eine Linearität des Ausgangssignals des Drucksensors sichergestellt werden. Über die ringförmige Anbindung wird ein seitliches Auslenken des Elektrodenbereiches, und damit nicht paralleles Verlagern zur festen ersten Elektrode im Wesentlichen ausgeschlossen.

Darüber hinaus ist in bevorzugter Ausgestaltung der Erfindung vorgesehen, dass das wenigstens eine Kopplungselement gleichzeitig der elektrischen Kontaktierung der zweiten Elektrode dient. Hierdurch wird der Aufbau des mikromechanischen kapazitiven Drucksensors insgesamt sehr einfach gehalten.

Ferner ist in bevorzugter Ausgestaltung der Erfindung vorgesehen, dass der Hohlraum gegenüber einer Umgebung druckdicht verschlossen ist und einen Referenzdruck aufweist. Hierdurch lässt sich ein Absolutdrucksensor mit großer Empfindlichkeit erzielen.

Weitere bevorzugte Ausgestaltung der Erfindung ergeben sich aus den übrigen, in den Unteransprüchen genannten Merkmalen. Insbesondere das erfindungsgemäße Herstellungsverfahren bietet die Möglichkeit, mit an sich bekannten sicher und zuverlässig beherrschbaren Verfahrensschritten mikromechanische kapazitive Drucksensoren mit hoher Empfindlichkeit und geringem Platzbedarf herzustellen.

### Zeichnungen

Die Erfindung wird nachfolgend anhand der zugehörigen Zeichnungen näher erläutert. Es zeigen:
- Figur 1: eine schematische Schnittdarstellung durch einen erfindungsgemäßen mikromechanischen kapazitiven Drucksensor im Ruhezustand;
- Figur 2: eine schematische Schnittdarstellung durch den Drucksensor im belasteten Zustand und
- Figuren 3 - 8: einzelne Verfahrensschritte zur Herstellung eines mikromechanischen kapazitiven Drucksensors.

### Beschreibung des Ausführungsbeispiels

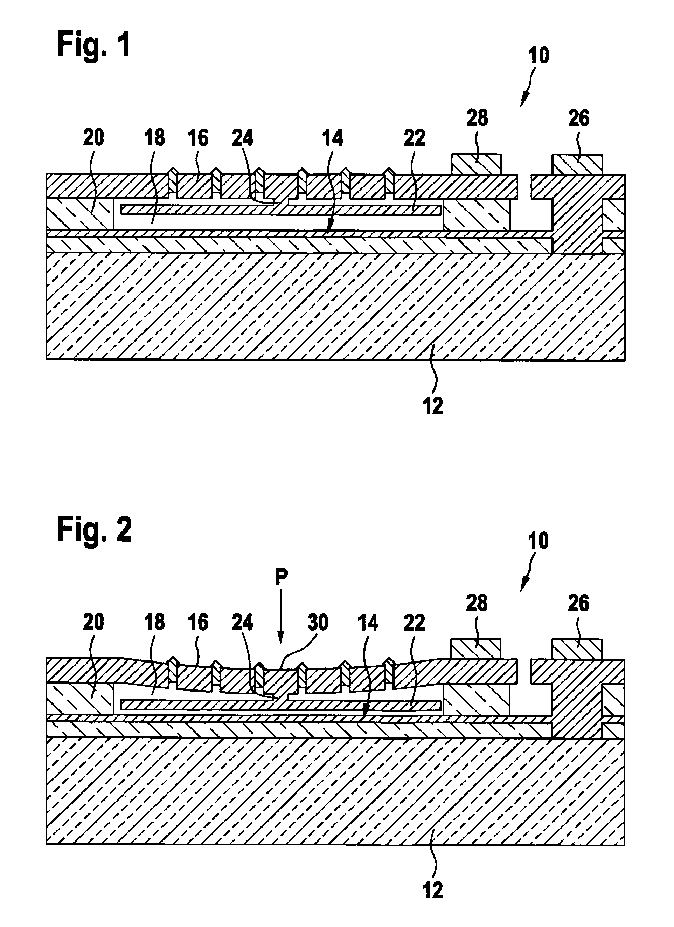

Figur 1 zeigt eine Schnittdarstellung eines insgesamt mit 10 bezeichneten mikromechanischen kapazitiven Drucksensors. Der Drucksensor 10 umfasst ein Substrat 12, auf dem eine erste Elektrode 14 angeordnet ist. Der Drucksensor 10 umfasst ferner eine zweite Elektrode 16, die mit einer Membran verbunden ist. Hierzu ist die Membran 22 über einen Hohlraum 18 gespannt und durch eine den Hohlraum 18 seitlich begrenzende Lagerschicht 20 abgestützt. Die zweite Elektrode 16 ist über ein Kopplungselement 24 mit der Membran 22 mechanisch und elektrisch leitend verbunden ist. Die Elektroden 14 und 16 sind über Kontakte 26 beziehungsweise 28 kontaktierbar. Im Hohlraum 18 herrscht ein Referenzdruck P_{R}.

Figur 2 zeigt den Drucksensor 10 während seines bestimmungsgemäßen Einsatzes. Liegt von außen an der Membran 22 ein Druck P an, der größer als der im Hohlraum 18 herrschende Referenzdruck P_{R} ist, wird die zweite Membran 22 durchgebogen. Hierdurch wird der Abstand zwischen der zweiten Elektrode 16 und der ersten Elektrode 14 verringert. Die Elektrode 14 und die Elektrode 16 sind plattenartig ausgebildet und bilden somit einen Plattenkondensator, dessen Kapazität durch den Abstand der Elektrode 14 zu der Elektrode 16 bestimmt wird. Durch Anlegen eines elektrischen Signals an die Kontakte 26 und 28 und entsprechende Auswertung des Signals kann die Kapazität des Kondensators gemessen werden und das Anliegen des Druckes P und eine Größe des Druckes P durch eine entsprechende Auswerteschaltung bestimmt werden.

Der Hohlraum 18 ist beispielsweise kreisförmig ausgebildet, das heißt, die Lagerschicht 20 umgibt den Hohlraum 18 ringförmig. Entsprechend ist die Membran 22 kreisförmig ausgebildet. Im geometrischen Mittelpunkt 30 der Membran 22 in Bezug auf den Hohlraum 18 ist das Kopplungselement 24 angeordnet. Hierdurch wird erreicht, dass das Kopplungselement 24 sich im Bereich der größten Durchbiegung der Membran 22 befindet und somit schon bei geringen Druckänderungen des Druckes P in Bezug auf den Referenzdruck P_{R} eine Annäherung der Elektrode 16 an die Elektrode 14 erfolgt. Hierdurch sind mit dem Drucksensor 10 sehr hohe Empfindlichkeiten realisierbar.

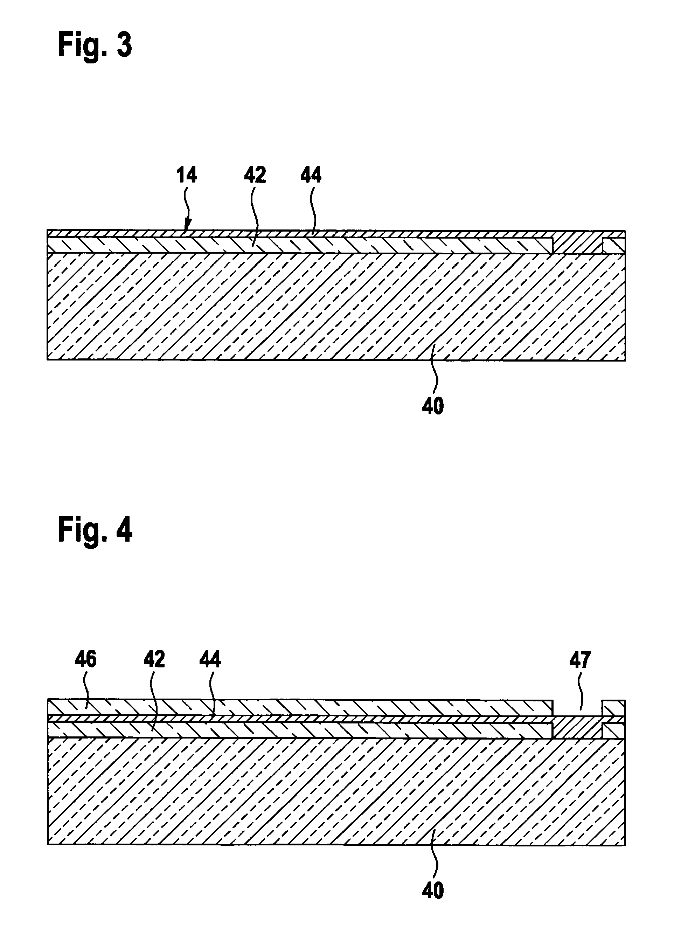

Anhand der Figuren 3 bis 8 wird die Herstellung des mikromechanischen kapazitiven Drucksensors 10 verdeutlicht.

Wie Figur 3 verdeutlicht, wird zunächst auf einen Siliziumwafer 40 eine Polysiliziumschicht 42 abgeschieden, innerhalb der durch Dotierung eine elektrisch leitfähige Schicht 44 erzeugt wird, die die spätere Elektrode 14 bildet.

Auf die Schicht 44 wird eine Oxidschicht 46, beispielsweise ein TEOS-Oxid (Tetraethylorthosilicat) abgeschieden. Im Bereich der späteren Kontaktierung der Elektrode 14 wird die Oxidschicht 46 strukturiert, das heißt, in diesem Bereich wird das Oxid 46 gezielt entfernt. Figur 4 verdeutlicht dies durch die strukturierte Öffnung 47.

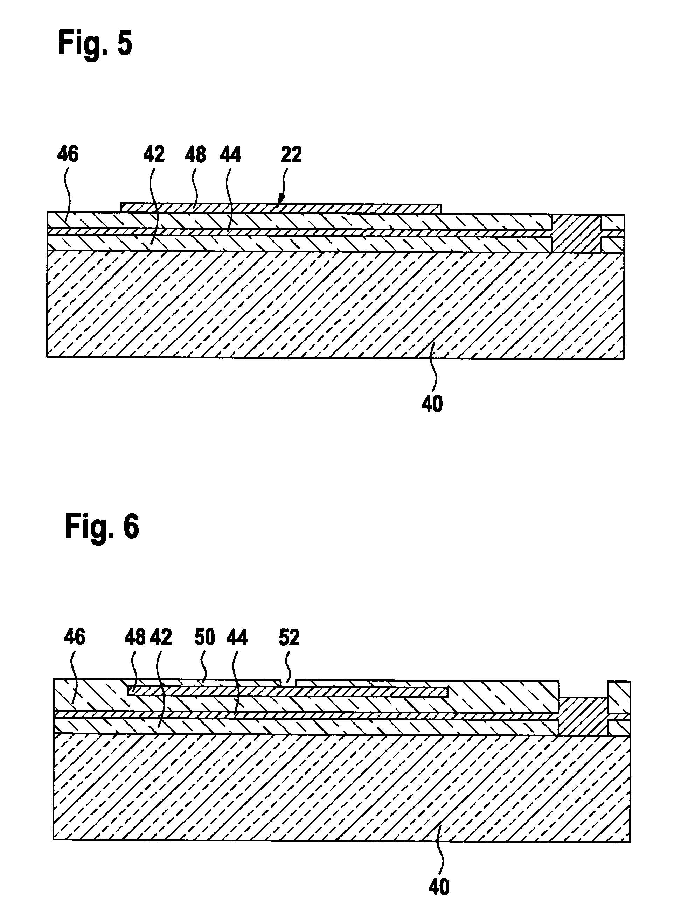

Wie Figur 5 verdeutlicht, wird auf die Oxidschicht 46 eine Polysiliziumschicht 48 abgeschieden. Durch entsprechende Maskierung wird die Polysiliziumschicht 48 in ihrer Größe so bemessen, dass diese der späteren Elektrode 16 entspricht. Durch entsprechende Dotierung wird eine elektrische Leitfähigkeit der Polysiliziumschicht 48 eingestellt.

In einer nicht dargestellten Variante kann die Polysiliziumschicht 48 mit einer Vielzahl von kleinen Durchgangslöchern strukturiert werden, die ein späteres Ätzen der Schicht 46 begünstigen. Ferner kann vorgesehen sein, die Polysiliziumschicht 48 durch eine Epipolyschicht aufzudicken. Hierdurch wird möglich, relativ große stabile spätere sensitive Schichten zu erzielen.

Während des Abscheidens der Polysiliziumschicht 48 wird gleichzeitig die in der Oxidschicht 46 vorgesehene Öffnung 47 zur Kontaktierung der Schicht 44 mitgefüllt.

Figur 6 zeigt, dass anschließend auf die Polysiliziumschicht 48 beziehungsweise auf die Oxidschicht 46 eine weitere Oxidschicht 50 abgeschieden wird. In dieser Oxidschicht 50 wird eine Öffnung 52 bis auf die Polysiliziumschicht 48 strukturiert.

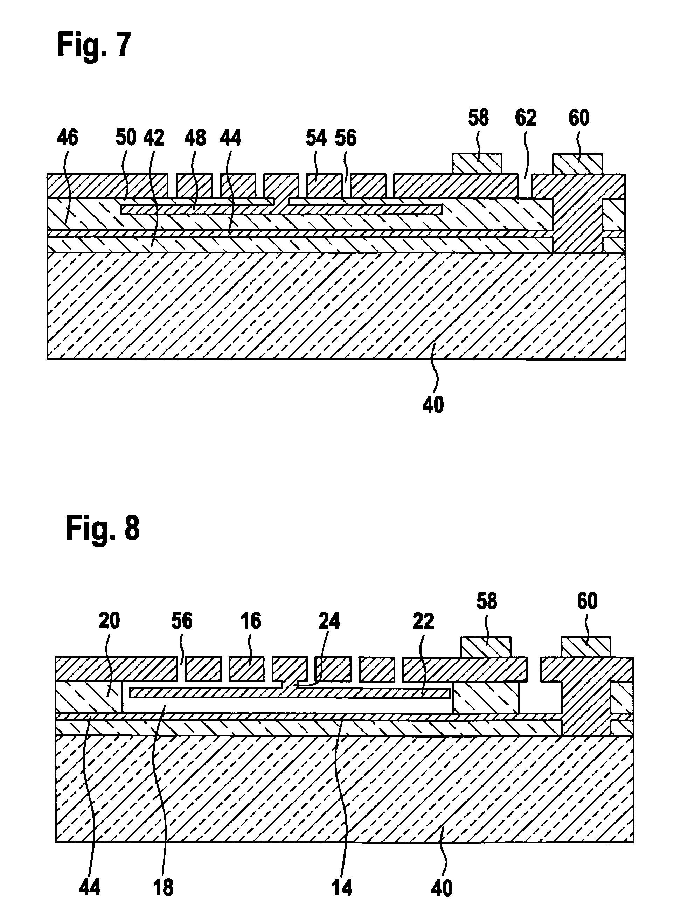

Wie Figur 7 verdeutlicht, wird anschließend auf die Oxidschicht 50 eine weitere Polysiliziumschicht 54 aufgebracht. Diese Polysiliziumschicht 54 bildet die spätere Membran 22. Das Abscheiden des Polysiliziums erfolgt hierbei gleichzeitig in die Öffnung 52, so dass eine Verbindung zwischen der Polysiliziumschicht 54 und der Polysiliziumschicht 48 entsteht. Hier kann vorgesehen sein, zusätzlich eine Aufdickung mittels einer Epipolyschicht vorzunehmen. Die Polysiliziumschicht 54 wird mit einer Vielzahl von Durchgangsöffnungen 56 strukturiert. Diese Durchgangsöffnungen 56 legen Zugänge zu der Oxidschicht 50 beziehungsweise Oxidschicht 46 frei.

Zusätzlich werden metallische Bereiche 58 und 60 abgeschieden, die der späteren Kontaktierung der Elektroden 14 beziehungsweise 16 dienen. Eine weitere Durchgangsöffnung im Bereich 62 in der Polysiliziumschicht 54 dient der elektrischen Isolierung der Kontakte voneinander.

Schließlich werden, wie Figur 8 verdeutlicht, mittels eines Ätzprozesses, beispielsweise eines Gasphasenätzverfahrens, die Oxidschichten 46 beziehungsweise 50 geätzt. Der Zugang erfolgt hierbei über die Öffnungen 56 in der Polysiliziumschicht 54 und die gegebenenfalls in der Polysiliziumschicht 48 vorgesehenen weiteren Durchgangsöffnungen (Perforierung). Durch Ätzen der Oxidschichten 46 beziehungsweise 50 entsteht der Hohlraum 18, der seitlich von der Lagerschicht 20 (ehemalige Bereiche der Oxidschichten 46 und 50) begrenzt ist. Die Oxidschichten 46 und 50 bilden somit so genannte Opferschichten.

Zur einen Seite wird der Hohlraum 18 durch die, die erste Elektrode 14 bildende Polysiliziumschicht 44 begrenzt. Da die Oxidschicht beiderseits der Polysiliziumschicht 48 geätzt wird, entsteht der in den Hohlraum 18 einkragende Elektrode 16, die über ein Koppelelement 24 mit der Membran 22 mechanisch und elektrisch leitend verbunden ist.

Die verbleibenden Öffnungen 56 werden anschließend verschlossen. Dies kann beispielsweise durch Abschalten eines Oxides, beispielsweise eines TEOS-Oxides (Tetraethylorthosilicat) erfolgen. Die verschlossenen Öffnungen 56 sind in den Figuren 1 und 2 am fertigen Drucksensor 10 verdeutlicht. Vor Verschließen der Öffnungen 56 kann in den Hohlraum 18 ein definierter Referenzdruck P_{R} eingestellt werden.

## Patentansprüche

1. Verfahren zur Herstellung eines mikromechanischen kapazitiven Drucksen sors mit folgenden Schritten:
- Herstellen einer ersten Elektrode durch Erzeugen einer ersten elektrisch leitfähigen Schicht (44) auf einem Substrat (40),
- Abscheiden einer Opferschicht (46) auf der elektrisch leitfähigen Schicht (44),
- Herstellen einer zweiten Elektrode durch Abscheiden einer zweiten elektrisch leitfähigen Schicht (48) auf der Opferschicht (46),
- Abscheiden einer weiteren Opferschicht (50) auf der zweiten elektrisch leitfähigen Schicht (48),
- Einbringen wenigstens einer Öffnung (52) in die zweite Opferschicht (50) bis zur zweiten elektrisch leitfähigen Schicht (48),
- Herstellen einer Membran durch Abscheiden einer dritten elektrisch leitfähigen Schicht (54) auf die zweite Opferschicht (50) und in die Öffnung (52) der zweiten Opferschicht (50),
- Einbringen von wenigstens einer Öffnung (56) in die dritte elektrisch leitfähige Schicht (54),
- Ätzen der ersten und zweiten Opferschicht (46, 50) durch die wenigs-tens eine Öffnung (56) zur Bildung eines Hohlraumes (18) zwischen der ersten elektrisch leitfähigen Schicht (44) und der dritten elektrisch leitfä-higen Schicht (54),
- Verschließen der wenigstens einen Öffnung (56) und
- Kontaktieren der ersten und dritten elektrisch leitfähigen Schichten (44 und 54).

2. Verfahren nach Anspruch 1, **dadurch gekennzeichnet, dass** vor dem Abscheiden der zweiten Opferschicht (50) in die zweite elektrisch leitfähige Schicht (48) Durchgangsöffnungen eingebracht werden.

## Claims

1. Method for producing a micromechanical capacitive pressure sensor comprising the following steps:
- producing a first electrode by producing a first electrically conductive layer (44) on a substrate (40),
- depositing a sacrificial layer (46) on the electrically conductive layer (44),
- producing a second electrode by depositing a second electrically conductive layer (48) on the sacrificial layer (46),
- depositing a further sacrificial layer (50) on the second electrically conductive layer (48),
- introducing at least one opening (52) into the second sacrificial layer (50) as far as the second electrically conductive layer (48),
- producing a membrane by depositing a third electrically conductive layer (54) onto the second sacrificial layer (50) and into the opening (52) in the second sacrificial layer (50), and
- introducing at least one opening (56) into the third electrically conductive layer (54),
- etching the first and second sacrificial layers (46, 50) through the at least one opening (56) in order to form a cavity (18) between the first electrically conductive layer (44) and the third electrically conductive layer (54),
- closing the at least one opening (56), and
- contact-connecting the first and third electrically conductive layers (44 and 54).

2. Method according to Claim 1, **characterized in that** through-openings are introduced into the second electrically conductive layer (48) before the second sacrificial layer (50) is deposited.

## Revendications

1. Procédé de fabrication d'un détecteur micromécanique capacitif de pression, le procédé présentant les étapes suivantes :
- réalisation d'une première électrode par formation d'une première couche électriquement conductrice (44) sur un substrat (40),
- dépôt d'une couche sacrifiée (46) sur la couche électriquement conductrice (44),
- réalisation d'une deuxième électrode par dépôt d'une deuxième couche électriquement conductrice (48) sur la couche sacrifiée (46),
- dépôt d'une autre couche sacrifiée (50) sur la deuxième couche électriquement conductrice (48),
- formation d'au moins une ouverture (52) dans la deuxième couche sacrifiée (50), l'ouverture s'étendant jusqu'à la deuxième couche électriquement conductrice (48),
- réalisation d'une membrane par dépôt d'une troisième couche électriquement conductrice (54) sur la deuxième couche sacrifiée (50) et dans l'ouverture (52) de la deuxième couche sacrifiée (50),
- formation d'au moins une ouverture (56) dans la troisième couche électriquement conductrice (54),
- gravure de la première et de la deuxième couche sacrifiée (46, 50) par la ou les ouvertures (56) en vue de former une cavité (18) entre la première couche électriquement conductrice (44) et la troisième couche électriquement conductrice (54),
- fermeture de la ou des ouvertures (56) et
- mise en contact mutuel de la première et de la troisième couche électriquement conductrice (44 et 54).

2. Procédé selon la revendication 1, **caractérisé en ce que** des ouvertures de passage sont ménagées dans la deuxième couche électriquement conductrice (48) avant le dépôt de la deuxième couche sacrifiée (50).
